# EUROPEAN PATENT APPLICATION

(11) **EP 4 123 554 A1**
(43) Date of publication of application: **25.01.2023**
(21) Application number: 20925644.5
(22) Date of filing: 17.03.2020
(51) Int. Cl.: G06Q 50/04, G06Q 10/04

(54) **INFORMATION PROCESSING DEVICE, WORK PLAN DETERMINATION METHOD, AND WORK PLAN DETERMINATION PROGRAM**

(71) Applicant: FUJITSU LIMITED, Kawasaki-shi, Kanagawa 211-8588 (JP)
(72) Inventor: YAMAZAKI, Takashi, Kawasaki-shi, Kanagawa 211-8588 (JP)
(74) Representative: Hoffmann Eitle
(86) International application number: PCT/JP2020/011727
(87) International publication number: WO 2021/186551

(57) **Abstract**

In regard to a work line, an information processing device includes a solution extraction unit that executes a series of processes of: generating child individuals by assigning a defined number of individuals to which a feeding order of part of the plurality of objects to the work line is given as input variables, as parent individuals, and evolving generations from the parent individuals by a genetic algorithm; calculating evaluation functions according to a plurality of objective functions for simulation results when the part of the objects are fed to the work line in each feeding order of the parent individuals and the child individuals; and extracting the defined number of individuals of which the evaluation functions satisfy a predetermined condition, as solutions, in which, when repeatedly executing the series of processes while raising a number of the objects one by one, the solution extraction unit ensures feeding history information to be taken over to a next generation by: linking histories traced by the extracted individuals with any of the defined number of individual numbers; adding the individual numbers to the parent individuals as the input variables; and mating directly the individual numbers by the genetic algorithm when the generations evolve.

## Description

### FIELD

The present application relates to an information processing device, a work plan determination method, and a work plan determination program.

### BACKGROUND

A technique for generating a production plan for producing a plurality of types of production items through a plurality of works has been disclosed (for example, refer to Patent Document 1).

### CITATION LIST

### PATENT DOCUMENT

Patent Document 1: Japanese Laid-open Patent Publication No. 2003-84819

### SUMMARY

### [TECHNICAL PROBLEM]

For example, as an effort to determine a production work plan, a technique of applying a model predictive control technique and using sequential optimization in a multi-objective optimization technique is conceivable. Specifically, an approach is being considered in which a computable small number of products are calculated by an optimization solver such as a line simulator, and the feed products are successively determined. However, since the model predictive control, which is the basis of the method of sequentially determining the products, is based on single-objective optimization, the solution is supposed to be uniquely extracted from the Pareto solution group extracted by the multi-objective optimization. When there is a plurality of objective functions, a long computation time is taken to perform sequential optimization on each objective function. In addition, when a plurality of objective functions is transformed into a single objective by a weighted average or the like, it is difficult to evolve the original optimum solution group into an optimum solution by comprehensively calculating the original optimum solution group.

In one aspect, it is an object of the present invention to provide an information processing device, a work plan determination method, and a work plan determination program capable of improving the optimum solution determination accuracy while suppressing an increase in computation time.

### [SOLUTION TO PROBLEM]

In one form, the information processing device is an information processing device that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects, and includes a solution extraction unit that executes a series of processes that include: a process of generating child individuals by assigning a defined number of individuals to which a feeding order of part of the plurality of objects to the work line is given as input variables, as parent individuals, and evolving generations from the parent individuals by a genetic algorithm; a process of calculating evaluation functions according to a plurality of objective functions for simulation results when the part of the objects are fed to the work line in each feeding order of the parent individuals and the child individuals; and a process of extracting the defined number of individuals of which the evaluation functions satisfy a predetermined condition, as solutions, in which, when repeatedly executing the series of processes while raising a number of the objects one by one, the solution extraction unit ensures feeding history information to be taken over to a next generation by: linking histories traced by the extracted individuals with any of the defined number of individual numbers; adding the individual numbers to the parent individuals as the input variables; and mating directly the individual numbers by the genetic algorithm when the generations evolve.

According to an aspect of the embodiments, an information processing device that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects, the information processing device includes a solution extraction unit that executes a series of processes that include: a process of generating child individuals by assigning a defined number of individuals to which a feeding order of part of the plurality of objects to the work line is given as input variables, as parent individuals, and evolving generations from the parent individuals by a genetic algorithm; a process of calculating evaluation functions according to a plurality of objective functions for simulation results when the part of the objects are fed to the work line in each feeding order of the parent individuals and the child individuals; and a process of extracting the defined number of individuals of which the evaluation functions satisfy a predetermined condition, as solutions, wherein when repeatedly executing the series of processes while raising a number of the objects one by one, the solution extraction unit ensures feeding history information to be taken over to a next generation by: linking histories traced by the extracted individuals with any of the defined number of individual numbers; adding the individual numbers to the parent individuals as the input variables; and mating directly the individual numbers by the genetic algorithm when the generations evolve.

### [ADVANTAGEOUS EFFECTS OF INVENTION]

The optimum solution determination accuracy may be improved while an increase in computation time is suppressed.

### BRIEF DESCRIPTION OF DRAWINGS

FIG. 1 is a diagram illustrating a manufacturing line model;
FIGs. 2A and 2B are diagrams illustrating product information:
FIG. 3A is a diagram schematically illustrating a result of multi-objective optimization calculation when a first feed product is determined, and FIG. 3B is a diagram illustrating the first feed products of individuals forming a Pareto solution;
FIG. 4 is a diagram schematically illustrating a generation evolution method at the time of determining the feeding order for second feed products;
FIG. 5A is a diagram illustrating a conceptual diagram of a computation result, and FIG. 5B is a diagram illustrating an updated determined feeding order. FIG. 5C is a diagram illustrating feeding histories linked with individual numbers;
FIG. 6 is a diagram schematically illustrating a calculation result at the time of determining an n-th feed product;
FIG. 7A is a functional block diagram representing an overall configuration of an information processing device according to a first embodiment, and FIG. 7B is a block diagram illustrating a hardware configuration of the information processing device;
FIG. 8 is a flowchart representing an example of a work plan determination process executed by the information processing device;
FIG. 9A is a table illustrating optimization conditions, FIG. 9B is a table illustrating an initial feeding order, and FIG. 9C is a table illustrating determined order information stored in a determined feeding order storage unit; and
FIG. 10 is a diagram illustrating a case where the Pareto solution of the n-th feed product is worked out from the Pareto solution of the first feed product by the approach of the present embodiment.

### DESCRIPTION OF EMBODIMENTS

In a case where high-mix low-volume production is performed, the product variety will change many times during the day. Therefore, products of different varieties will be mixed and flowed on the same production line. In such a mixed flow production factory, conditions such as what kind of process is to be conducted and which piece of equipment is to be used differ depending on the varieties. Furthermore, how products move between buildings and between production facilities in the factory is not fixed. Meanwhile, since the processes common to many varieties are also complicatedly incorporated, many varieties merge before those processes, and traffic congestion occurs naturally. In this manner, when there are many branches and merges of product work paths, it is exceptionally important to resolve production instructions that maximize the efficiency of the entire factory, but it is also an exceptionally difficult problem.

For example, as an effort to determine a production work plan, a technique of applying a model predictive control technique and using sequential optimization in a multi-objective optimization technique is conceivable. Specifically, a computable small number of products are calculated by an optimization solver (such as a line simulator), and a first feed product is determined.

Here, an example of the line simulator will be described. First, an example of a manufacturing line model to be simulated by the line simulator will be described. The manufacturing line model contains branches and merges, and a plurality of products is fed one by one. For each of the plurality of products, a plurality of works is performed in order. At least part of the works are different between the plurality of products.

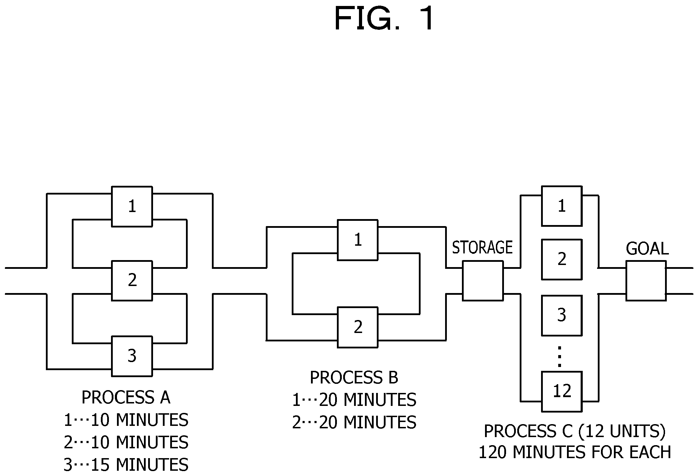

As an example, as illustrated in FIG. 1, the manufacturing line model includes equipment belonging to a process A (three units), equipment belonging to a process B (two units), a storage, and equipment belonging to a process C (12 units). A belt conveyor is provided between the respective processes. The belt conveyor has branches and merges, and the product reaches the goal via any pieces of the equipment in the process A, any piece of the equipment in the process B, and any piece of the equipment in the process C. Note that, at each branch, the manufacturing line model may automatically control the direction in which the product travels, based on the product feeding plan, or a worker in charge of the branch may manipulate the direction in which the product travels, based on the product feeding plan. In addition, in each process, for example, product assembly, inspection, packaging, or the like is executed.

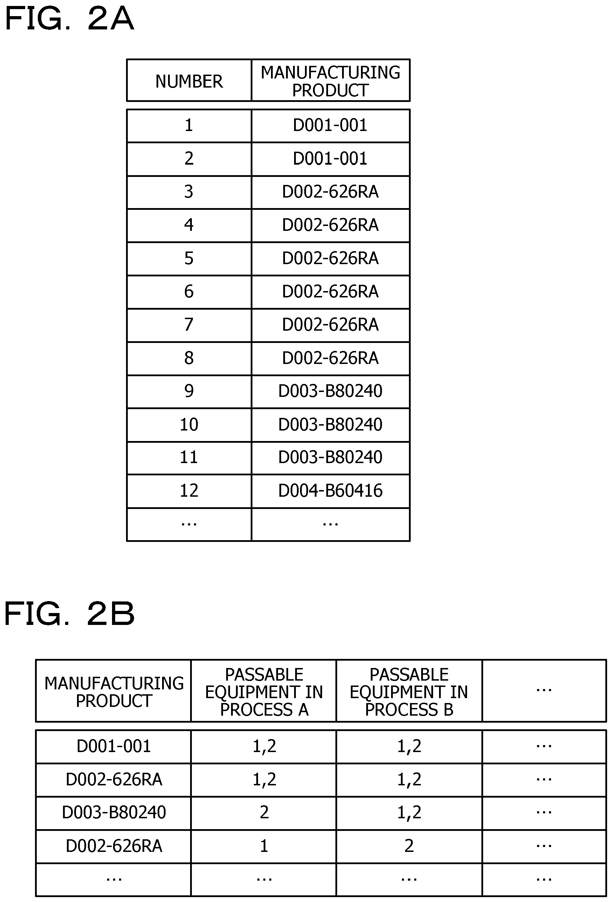

The line simulator divides such a manufacturing line model into slight spaces, and executes a simple model computation such as flowing the product into the space instantly ahead when the space becomes vacant. At that time, the line simulator reads information on each product from a production master that stores information about each product. The production master stores, for example, a list of model numbers of products that have to be fed into the manufacturing line model, as illustrated in FIG. 2A. In addition, as illustrated in FIG. 2B, the production master stores, for example, information on equipment that allows the product of each model number to pass in each process.

The product fed into the manufacturing line model stays in the equipment in each process for a staying time in accordance with the information stored in the production master and passes through the equipment. As optimization indices (objective functions), the throughput time (the time from the start of feeding to when all products reach the goal), the maximum number of stores in the storage, the cost of each process, the operation rate of each piece of equipment, the delivery date compliance rate, and the like may be used.

The concept of the real-time optimization algorithm includes the following processes.
(1) As a near-future prediction, among the products to be fed into the manufacturing line model, a feeding plan for a number of (k: for example, 12) products that allow the formulation of a product feeding plan without causing an information explosion (combinatorial explosion) is optimized.
(2) In the optimized product feeding plan, a product feeding plan for the first n (for example, one) products is adopted.
(3) The products for which the product feeding plan has been determined are excluded, and the processes in (1) and (2) are repeated.

For example, the optimum solution is found for a product A, a product B, a product C, and a product D. It is assumed that this designates the product A as a first feed product. Next, the optimum solution is found for the product B, the product C, the product D, and a product E. It is assumed that this designates the product C as a second feed product. By repeating this procedure, the feeding order of the products will be designated in order from the first feed product.

This approach makes it easier to find a solution of a huge combination problem by sequentially performing optimization calculation on a number of fed productions for which finding a solution is possible and may execute multi-objective optimization at high speed. However, since the model predictive control, which is the basis of the method of sequentially determining the products, is based on single-objective optimization, the solution is supposed to be uniquely extracted from the Pareto solution group extracted by the multi-objective optimization. When there is a plurality of objective functions, a long computation time is taken to perform sequential optimization on each objective function. In addition, when a plurality of objective functions is transformed into a single objective by a weighted average or the like, it is difficult to evolve the original optimum solution group (Pareto solution) into an optimum solution by comprehensively calculating the original optimum solution group (Pareto solution).

Thus, the following embodiments will describe an information processing device, a work plan determination method, and a work plan determination program capable of improving the optimum solution determination accuracy by expanding a search space for the optimum solution while suppressing an increase in computation time.

### [First Embodiment]

In the present embodiment, when sequential multi-objective optimization is carried out, a product feeding history for a multi-objective solution determined in the optimization is taken over as an initial condition for determining the feeding order of the products. At that time, instead of finding with the whole feeding history as an input variable, individual numbers forming the Pareto solution that records the feeding order determined by the time of determining an instantly previous feed product is assigned as the input variable and will be reflected when the feeding order for the next generation is determined. Hereinafter, the principle of the present embodiment will be described.

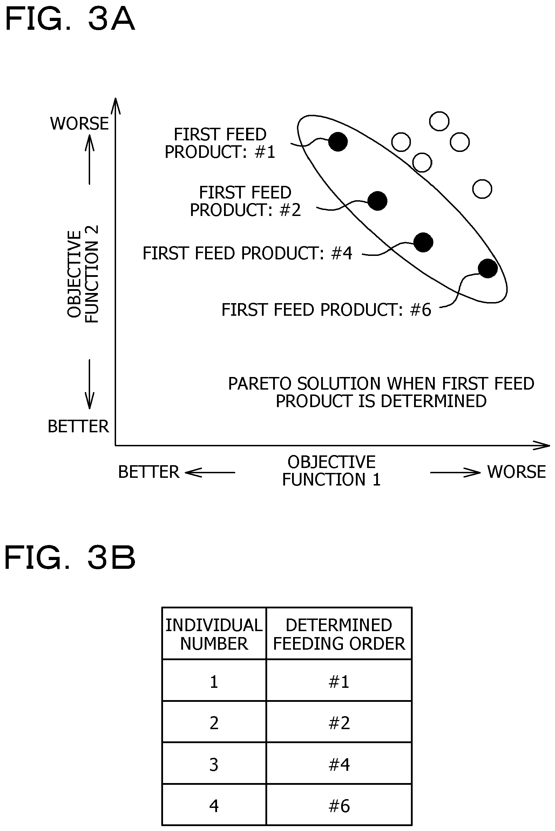

FIG. 3A is a diagram schematically illustrating a result of multi-objective optimization calculation when the first feed product is determined. A genetic algorithm is used as an optimization approach. In the example in FIG. 3A, two types of the objective functions are assumed as an objective function 1 and an objective function 2, and the number of individuals in the initial generation is assumed as four. In FIG. 3A, the group of individuals of the optimum solutions at the top of the Pareto ranking (Pareto solution) includes four individuals surrounded by the ellipse. The Pareto ranking may be designated by an evaluation function obtained from the objective function 1 and the objective function 2 for each individual. Each optimum solution includes the feeding order of respective products, such as the first feed product and the second feed product. One of the individual numbers (1 to 4) is attached to each optimum solution and saved in a database in association with information on the first feed product, as history information. In this case, it is arbitrary to which optimum solution the individual numbers 1 to 4 are attached. At the time of determining the second feed product, the history information at the time of determining the first feed product is used.

For example, it is assumed that the first feed products of the individuals forming a Pareto solution are determined as illustrated in FIG. 3B. In the example in FIG. 3B, in the individual with the individual number 1, the first feed product number is determined to be #1. For the individual with the individual number 2, the first feed product number is determined to be #2. For the individual with the individual number 3, the first feed product number is determined to be #4. For the individual with the individual number 4, the first feed product number is determined to be #6. These pieces of information are saved as history information in which the individual numbers and feed product information are associated with each other.

Next, the history information at the time of determining the first feed product is taken over to and reflected in optimization calculation at the time of determining the second feed product. In the present embodiment, the determined feeding order linked with the individual number as an input variables is given as a hidden input variable to the optimization calculation at the time of determining the second feed product and is joined as an input variable at the time of the optimization calculation.

For example, when the input variable explicitly given is assumed as the feeding order, it is assumed that an input variable intended to make feeds in the order of (#1, #2, #3, #4, #5, #6) is given as the input variable that determines the feeding order, as a certain initial condition for the initial generation. Furthermore, at the time of determining the second and subsequent feed products, the hidden input variable assigned as the individual number in the Pareto solution at the time of determining the previous feed product is imparted as the hidden input variable. By using the individual number as an input variable, the number of input variables for the optimization calculation is raised by one.

When the hidden input variable (individual number) at the time of determining the second feed product is 1, the feeding order is determined such that the product with #1 as the number of the first feed product is to be fed as the history at the time of determining the first feed product. Therefore, the remaining six products determined by the explicitly indicated input variable are assumed to be fed successively after #1. In this case, the product with #7 is added by assigning the feeding order as the order of #1, #2, #3, #4, #5, #6, and #7.

Alternatively, for example, when an individual whose hidden input variable (individual number) is 4 is targeted in the feeding order that is the order of #1, #2, #3, #6, #4, and #5, the history of the individual number 4 assigns the product with #6 as the first feed product. Thus, the product with #7 is added by assigning the feeding order as the order of #6, #1, #2, #3, #7, #4, and #5 with the product numbers subsequent to #6 incremented by one. For other individuals (individual numbers 2 and 3), the product with #7 is added similarly, and the feeding order is determined as an input variable.

A simulation using a line simulator is performed on each of these individuals. This allows the objective functions to be calculated for each individual, and the evaluation function may be obtained. In the present embodiment, these are each assumed as the evaluation function of the parent individual.

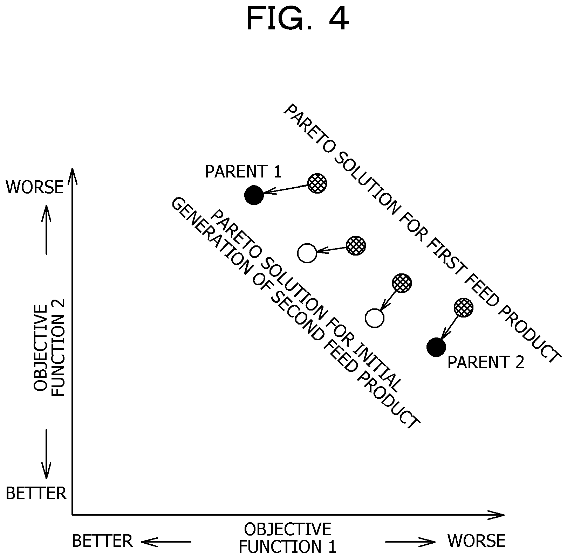

FIG. 4 is a diagram schematically illustrating a generation evolution method at the time of determining the feeding order for the second feed products. For example, a case where a child generation is formed from two individuals, namely, a parent 1 (individual number: 1) and a parent 2 (individual number: 4), will be described. As described above, the feeding order of #1, #2, #3, #4, #5, and #6 is given as the input variable representing the feeding order of the parent 1, and the hidden input variable indicating the history is 1. As described above, the feeding order of #1, #2, #3, #6, #4, and #5 is given as the input variable representing the feeding order of the parent 2, and the hidden input variable indicating the history is 4.

When the child generation is calculated from these two parents, the next generation is determined for each input variable. For example, by mating the order of #1, #2, #3, #4, #5, and #6 and the order of #1, #2, #3, #6, #4, and #5, it is assumed that the order of #1, #2, #3, #6, #5, and #4 is determined as the input variable representing the feeding order.

Next, when determination is similarly made for the hidden input variable, the history of the child generation is calculated by mating directly the individual number as well, instead of making a determination by the feeding order history left in the history. Specifically, it is assumed that the hidden input variables of the parent 1 and the parent 2 are 1 and 4, respectively, and the individual number of the child determined from this information is 3. In this case, the history coupled with the individual number 3 is assigned as the feeding order of the child generation. Actually, since the first feed product feeding history of the individual number 3 supposes to feed #4, #4 is assigned as the first feed product, and thereafter, #1, #2, #3, #6, #5, and #4 in which the order has been adjusted are joined. Since the first feed product is #4, the order of products subsequent to #4 is incremented by one, and the feeding order of this child individual is assigned as #4, #1, #2, #3, #7, #6, and #5.

A simulation using a line simulator is performed on each child individual. This allows the objective functions to be calculated for each child individual, and the evaluation function may be obtained. In the present embodiment, these are each assumed as the evaluation function of the child individual.

From among all the parent individuals and all the child individuals, four individuals for which the best evaluation function was obtained are extracted as a Pareto solution (optimum solution group). The individual numbers (1 to 4) are attached to each of these individuals. Each optimum solution includes the feeding order of respective products, such as the first feed product and the second feed product. The individual number and the feeding order of the first feed product and the second feed product included in the individual with the individual number are saved in a database as history information. In this manner, by repeating the evolution of generations, the first feed product and the second feed product may be determined.

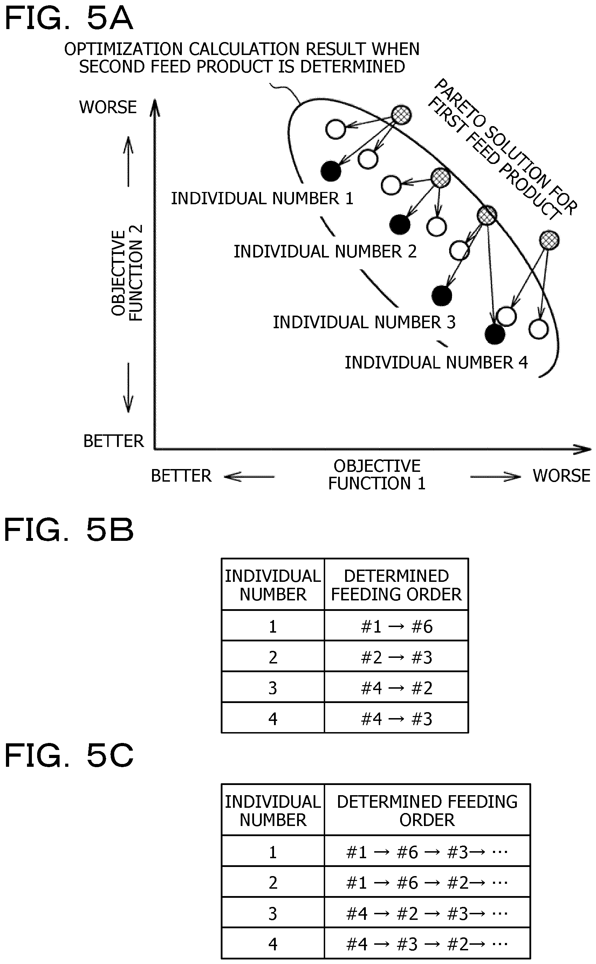

FIG. 5A is a diagram illustrating a conceptual diagram of a computation result at this time. By linking the feeding history with the individual number and determining the linked individual number as an input variable, a product that was not selected at the time of determining the first feed product will not be selected as the first feed product. Meanwhile, it is of course possible that feed products listed as candidates for the optimized feeding order at the time of determining the first feed product will not be chosen. As in FIG. 5A, the individual number 3, which was a candidate at the time of determining the first feed product, will be deleted from the history candidates at the time of determining the second feed product when the individual number 3 does not give the optimum solution at the time of determining the second feed product compared with any other individuals. As a result, the determined feeding order is updated as in FIG. 5B, and the history information allocated to the individual number will be augmented up to the second feed product.

By repeating this determination process until the feeding order of all the products is determined, the feeding history is continuously updated on the individual number. Finally, at the time of determining the n-th feed product, the feeding histories linked with the individual numbers as in FIG. 5C are obtained. On the basis of this, the n-th feed product is determined. In this manner, by taking over the history information to the next generation and reflecting the history information in the next generation by the individual number as the hidden input variable, undesired feeding order will not be taken into account. As a result, the optimum feeding history information may be widely and comprehensively obtained with a smaller number of calculation trials. That is, the optimum solution determination accuracy may be improved by expanding the search space for the optimum solution while the computation time is shortened.

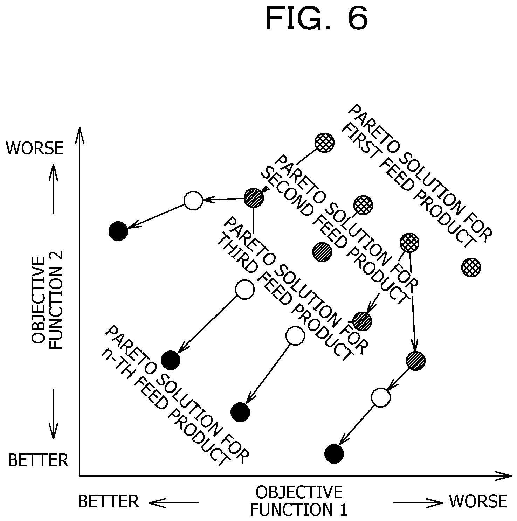

FIG. 6 is a diagram schematically illustrating a calculation result at the time of determining the n-th feed product.

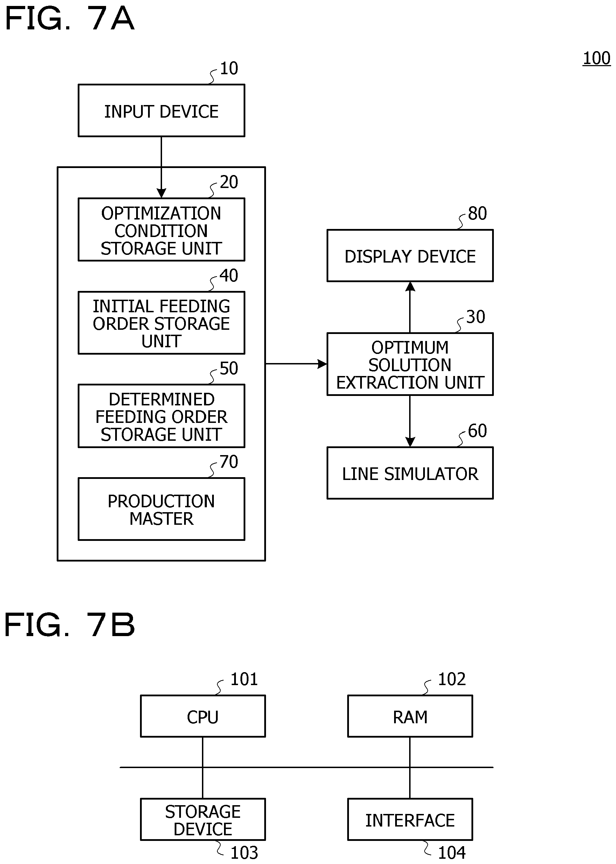

FIG. 7A is a functional block diagram representing an overall configuration of an information processing device 100 according to a first embodiment. As illustrated in FIG. 7A, the information processing device 100 includes an input device 10, an optimization condition storage unit 20, an optimum solution extraction unit 30, an initial feeding order storage unit 40, a determined feeding order storage unit 50, a line simulator 60, a production master 70, a display device 80, and the like. The input device 10 is an input device such as a keyboard, a mouse, or a touch panel. The display device 80 is a liquid crystal display or the like and is a device that displays the result and the like of a work plan determination process by the information processing device 100.

FIG. 7B is a block diagram illustrating a hardware configuration of the optimization condition storage unit 20, the optimum solution extraction unit 30, the initial feeding order storage unit 40, the determined feeding order storage unit 50, the line simulator 60, and the production master 70 of the information processing device 100. As illustrated in FIG. 7B, the information processing device 100 includes a central processing unit (CPU) 101, a random access memory (RAM) 102, a storage device 103, an interface 104, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. For example, a read only memory (ROM), a solid state drive (SSD) such as a flash memory, a hard disk to be driven by a hard disk drive, or the like may be used as the storage device 103. The storage device 103 stores the work plan determination program. The interface 104 is an interface device between the input device 10, the display device 80, and the like. When the CPU 101 executes the work plan determination program, the optimization condition storage unit 20, the optimum solution extraction unit 30, the initial feeding order storage unit 40, the line simulator 60, the determined feeding order storage unit 50, and the production master 70 are implemented. Note that hardware such as a dedicated circuit may be used as the optimization condition storage unit 20, the optimum solution extraction unit 30, the initial feeding order storage unit 40, the line simulator 60, the determined feeding order storage unit 50, and the production master 70.

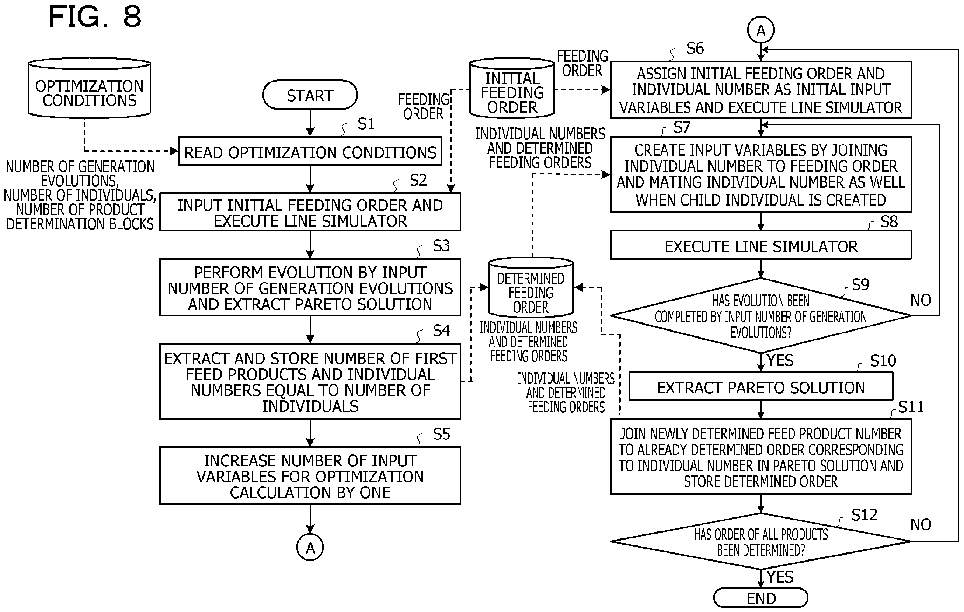

FIG. 8 is a flowchart representing an example of the work plan determination process executed by the information processing device 100. Hereinafter, the work plan determination process will be described with reference to the flowchart in FIG. 8.

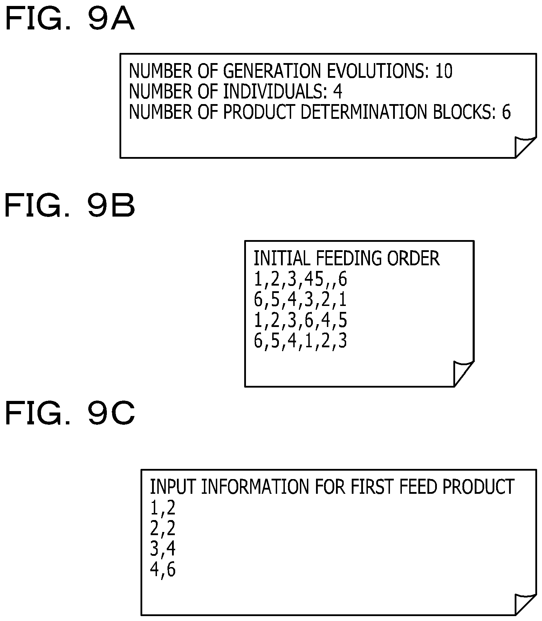

First, the optimum solution extraction unit 30 reads optimization conditions from the optimization condition storage unit 20 (step S1). FIG. 9A is a table illustrating the optimization conditions. As illustrated in FIG. 9A, the optimization conditions include the number of generation evolutions, the number of individuals, the number of product determination blocks, and the like. For example, it is assumed that the number of generation evolutions is ten, the number of individuals is four, and the number of product determination blocks is six. These optimization conditions have been input in advance by a user, for example, using the input device 10. The number of product determination blocks refers to the number of products as to how many feed products will be altered to find the optimum solution.

Next, the optimum solution extraction unit 30 reads the initial feeding order from the initial feeding order storage unit 40 and causes the line simulator 60 to execute the read initial feeding order (step S2). FIG. 9B is a table illustrating the initial feeding order. As illustrated in FIG. 9B, the initial feeding order includes a number of orders equal to the number of individuals (four). Each order includes a number of products equal to the number of product determination blocks. In the example in FIG. 9B, the order of #1, #2, #3, #4, #5, and #6, the order of #6, #5, #4, #3, #2, and #1, the order of #1, #2, #3, #6, #4, and #5, and the order of #6, #5, #4, #1, #2, and #3 are included. These orders may be any order as long as at least part of the orders do not overlap. These orders may be input in advance by the user using the input device 10, or may be generated by random numbers.

The line simulator 60 simulates, for example, the manufacturing line model illustrated in FIG. 1. At the time of simulation, the line simulator 60 uses information on each product stored in the production master 70. The production master 70 stores, for example, the product information illustrated in FIGs. 2A and 2B. The product information may be input in advance by the user using the input device 10. The optimum solution extraction unit 30 assigns these simulation results (four individuals) as parent individuals and obtains an evaluation function by calculating the objective function 1 and the objective function 2.

Next, the optimum solution extraction unit 30 evolves the obtained four parent individuals by the input number of generation evolutions. The optimum solution extraction unit 30 obtains the evaluation function by calculating the objective function 1 and the objective function 2 for each child individual. The optimum solution extraction unit 30 extracts the optimum solution group (Pareto solution) by extracting a number of optimum solutions equal to the number of individuals (four), for which the best evaluation function was obtained, from among all the parent individuals and all the child individuals (step S3). A genetic algorithm or the like may be used for evolution.

Next, the optimum solution extraction unit 30 attaches the individual numbers of 1 to 4 to each individual included in the Pareto solution and stores the first feed product and the individual number in the determined feeding order storage unit 50 as history information for each individual (step S4). FIG. 9C is a table illustrating determined order information stored in the determined feeding order storage unit 50. In the example in FIG. 9C, the first feed product number has been determined to be #1 for the individual number 1. The first feed product number has been determined to be #2 for the individual number 2. The first feed product number has been determined to be #4 for the individual number 3. The first feed product number has been determined to be #6 for the individual number 4.

Next, the optimum solution extraction unit 30 increases the number of input variables for the optimization calculation by one (step S5). The input variable here is the individual number. That is, the optimum solution extraction unit 30 joins the individual number to the input variables used for the optimization calculation.

Next, the optimum solution extraction unit 30 reads the initial feeding order from the initial feeding order storage unit 40 and causes the line simulator 60 to execute the simulation using the initial feeding order and the individual number as initial input variables (step S6). In this case, the optimum solution extraction unit 30 assigns the feeding order including the following product (#7 at the first execution of step S6) as the initial input variables using the individual number, as described with reference to FIGs. 3A and 3B. The following product is #7 when step S6 is executed for the first time. In addition, the optimum solution extraction unit 30 assigns the simulation results obtained in step S6 as parent individuals and calculates the objective function 1 and the objective function 2 for each parent individual to obtain the evaluation function.

Next, the optimum solution extraction unit 30 creates the input variables by evolving the generation from the parent individual obtained as a result of step S6 to the child individual (step S7). In step S7, the optimum solution extraction unit 30 reads the determined order information (the individual number and the determined feeding order) from the determined feeding order storage unit 50 and, as described with reference to FIG. 4, creates the input variables by joining the individual number to the feeding order and mating the joined individual number as well when the child individual is created. In this case, the optimum solution extraction unit 30 mates directly the individual number as well.

Next, the optimum solution extraction unit 30 causes the line simulator 60 to execute the simulation using the input variables created in step S7 (step S8). In addition, the optimum solution extraction unit 30 obtains the evaluation function by calculating the objective function 1 and the objective function 2 for each simulation result.

Next, the optimum solution extraction unit 30 verifies whether or not the evolution has been completed by the number of generation evolutions included in the optimization conditions (step S9). In the present embodiment, it is verified whether or not the evolution for ten generations has been completed.

When it is verified as "No" in step S9, the process is executed again from step S7. At the second and subsequent executions of step S7, the input variables for the next generation of the child individual are created. This will allow a simulation be performed for the next generation of the child individual. When it is verified as "Yes" in step S9, the optimum solution extraction unit 30 extracts the Pareto solution (step S10). In this case, the optimum solution extraction unit 30 extracts a number of optimum solutions equal to the number of individuals (four), for which the best evaluation function was obtained, from among all the parent individuals and all the child individuals.

Next, the optimum solution extraction unit 30 attaches the individual numbers 1 to 4 to each in the Pareto solution extracted in step S10 and stores the individual number and the feeding order of the first feed product and the second feed product included in the individual with the individual number, in the table of the determined feeding order storage unit 50 as history information. By performing in this manner, the newly determined feed product number is joined to the already determined order, and the determined order is added to the table of the determined feeding order storage unit 50 (step S11).

Next, the optimum solution extraction unit 30 verifies whether or not the order of all the products has been determined (step S12). In step S12, it is verified whether or not the order has been determined for all the products stored in the production master 70. When it is verified as "No" in step S12, the process is executed again from step S6. The product with #8 is added at the second execution of step S6, and the product with #9 is added at the third execution of step S6.

When it is verified as "Yes" in step S12, the execution of the flowchart ends. In this case, the display device 80 displays the feeding order of each individual stored in the determined feeding order storage unit 50. In this case, the value of each objective function may be displayed for each individual. By displaying the value of each objective function, the user may understand which objective function is allowed to be prioritized.

According to the present embodiment, when repeatedly executing a series of processes for determining one product feeding order by evolving the generation of the parent individual and extracting the optimum solution while raising the number of products one by one, the optimum solution extraction unit 30 ensures the feeding history information to be taken over to the next generation by linking the history traced by the extracted optimum solution with one of a number of individual numbers equal to the number of individuals, adding the individual number to the parent individual as an input variable, and mating directly the individual number by a genetic algorithm when the generations evolve. By performing in this manner, the optimum solution determination accuracy may be improved by expanding the search space for the optimum solution while the computation time is shortened.

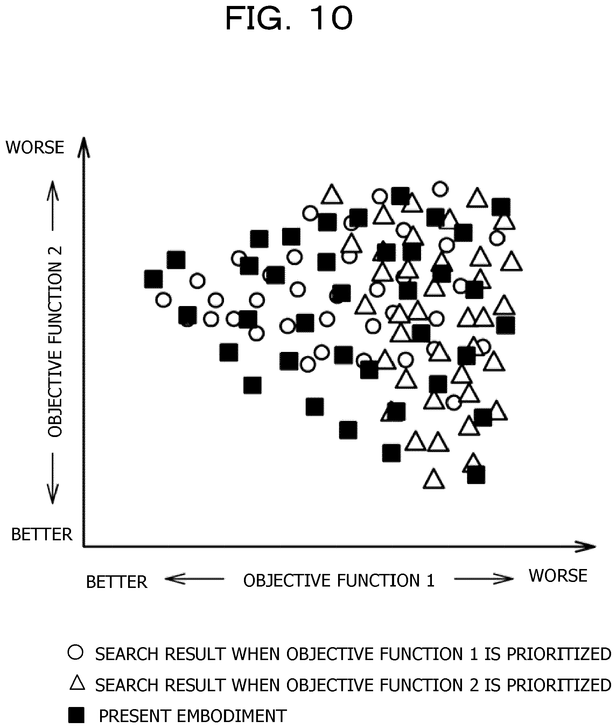

FIG. 10 is a diagram illustrating a case where the Pareto solution of the n-th feed product is worked out from the Pareto solution of the first feed product by the approach of the present embodiment. In FIG. 10, the black rectangles represent the result of the present embodiment. As illustrated in FIG. 10, it can be seen that the search space for the optimum solution is expanded in terms of both of the objective function 1 and the objective function 2. In contrast to this, in the search result when the objective function 1 is prioritized, it can be seen that the search space is biased such that the result of the objective function 1 becomes better. In addition, in the search result when the objective function 2 is prioritized, it can be seen that the search space is biased such that the result of the objective function 2 becomes better.

In the above embodiment, the manufacturing line is an example of a work line in which a plurality of objects is processed in a predetermined order, a plurality of works is performed in order on each of the plurality of objects, and at least part of the works among the plurality of works are different from each other between the plurality of objects. The product is an example of the object. The optimum solution extraction unit 30 functions as an example of a solution extraction unit that executes a series of processes including: a process of generating child individuals by assigning a defined number of individuals to which a feeding order of part of the plurality of objects to the work line is given as input variables, as parent individuals, and evolving generations from the parent individuals by a genetic algorithm; a process of calculating evaluation functions according to a plurality of objective functions for simulation results when the part of the objects are fed to the work line in each feeding order of the parent individuals and the child individuals; and a process of extracting the defined number of individuals of which the evaluation functions satisfy a predetermined condition, as solutions.

While the embodiments of the present invention have been described above in detail, the present invention is not limited to such specific embodiments, and various modifications and alterations may be made within the scope of the present invention described in the claims.

### REFERENCE SIGNS LIST

10Input device
200ptimization condition storage unit
30Optimum solution extraction unit
40Initial feeding order storage unit
50Determined feeding order storage unit
60Line simulator
70Production master
80Display device
100Information processing device

## Claims

1. An information processing device that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects, the information processing device comprising
a solution extraction unit that executes a series of processes that include: a process of generating child individuals by assigning a defined number of individuals to which a feeding order of part of the plurality of objects to the work line is given as input variables, as parent individuals, and evolving generations from the parent individuals by a genetic algorithm; a process of calculating evaluation functions according to a plurality of objective functions for simulation results when the part of the objects are fed to the work line in each feeding order of the parent individuals and the child individuals; and a process of extracting the defined number of individuals of which the evaluation functions satisfy a predetermined condition, as solutions, wherein
when repeatedly executing the series of processes while raising a number of the objects one by one, the solution extraction unit ensures feeding history information to be taken over to a next generation by: linking histories traced by the extracted individuals with any of the defined number of individual numbers; adding the individual numbers to the parent individuals as the input variables; and mating directly the individual numbers by the genetic algorithm when the generations evolve.

2. The information processing device according to claim 1, wherein the solution extraction unit determines a first feeding order of the objects for each of the extracted individuals at first execution of the series of processes, and successively determines the feeding order of the objects for the extracted solutions at next and subsequent execution of the series of processes.

3. The information processing device according to claim 2, wherein the solution extraction unit uses the feeding order determined and linked with the individual numbers, as the input variables.

4. A work plan determination method that specifies a predetermined order under conditions that a plurality of objects is processed in a work line in the predetermined order, a plurality of works is performed in order on each of the plurality of objects in the work line, and at least part of the works among the plurality of works are different from each other between the plurality of objects, the work plan determination method comprising
executing a series of processes that include: a process of generating child individuals by assigning a defined number of individuals to which a feeding order of part of the plurality of objects to the work line is given as input variables, as parent individuals, and evolving generations from the parent individuals by a genetic algorithm; a process of calculating evaluation functions according to a plurality of objective functions for simulation results when the part of the objects are fed to the work line in each feeding order of the parent individuals and the child individuals; and a process of extracting the defined number of individuals of which the evaluation functions satisfy a predetermined condition, as solutions, wherein
when repeatedly executing the series of processes while raising a number of the objects one by one, feeding history information is ensured to be taken over to a next generation by: linking histories traced by the extracted individuals with any of the defined number of individual numbers; adding the individual numbers to the parent individuals as the input variables; and mating directly the individual numbers by the genetic algorithm when the generations evolve.

5. The work plan determination method according to claim 4, further comprising
determining a first feeding order of the objects for each of the extracted individuals at first execution of the series of processes, and successively determining the feeding order of the objects for the extracted solutions at next and subsequent execution of the series of processes.

6. The work plan determination method according to claim 5, further comprising
using the feeding order determined and linked with the individual numbers, as the input variables.

7. A work plan determination program that causes a computer to specify a predetermined order under conditions that a plurality of objects is processed in a work line in the predetermined order, a plurality of works is performed in order on each of the plurality of objects in the work line, and at least part of the works among the plurality of works are different from each other between the plurality of objects, the work plan determination program comprising
executing a series of processes that include: a process of generating child individuals by assigning a defined number of individuals to which a feeding order of part of the plurality of objects to the work line is given as input variables, as parent individuals, and evolving generations from the parent individuals by a genetic algorithm; a process of calculating evaluation functions according to a plurality of objective functions for simulation results when the part of the objects are fed to the work line in each feeding order of the parent individuals and the child individuals; and a process of extracting the defined number of individuals of which the evaluation functions satisfy a predetermined condition, as solutions, wherein
when repeatedly executing the series of processes while raising a number of the objects one by one, feeding history information is ensured to be taken over to a next generation by: linking histories traced by the extracted individuals with any of the defined number of individual numbers; adding the individual numbers to the parent individuals as the input variables; and mating directly the individual numbers by the genetic algorithm when the generations evolve.

8. The work plan determination program according to claim 7, further comprising
determining a first feeding order of the objects for each of the extracted individuals at first execution of the series of processes, and successively determining the feeding order of the objects for the extracted solutions at next and subsequent execution of the series of processes.

9. The work plan determination program according to claim 8, further comprising
using the feeding order determined and linked with the individual numbers, as the input variables.
